# EUROPÄISCHE PATENTSCHRIFT

(11) **EP 1 593 188 B1**
(45) Veröffentlichungstag und Bekanntmachung des Hinweises auf die Patenterteilung: **25.07.2007**
(21) Anmeldenummer: 04701944.3
(22) Anmeldetag: 14.01.2004
(51) Int. Cl.: H02J 7/14, H02J 9/06

(54) **VORRICHTUNG ZUR ENERGIEVERSORGUNG EINES ZWEISPANNUNGS-BORDNETZES**
DEVICE FOR SUPPLYING POWER TO A TWO-VOLTAGE VEHICLE ELECTRIC SYSTEM
DISPOSITIF POUR ALIMENTER EN ENERGIE UN SYSTEME ELECTRIQUE BITENSION D'UN VEHICULE

(30) Priorität: 10.02.2003 DE 10305357
(43) Veröffentlichungstag der Anmeldung: 09.11.2005
(73) Patentinhaber: SIEMENS AKTIENGESELLSCHAFT, 80333 München (DE)
(72) Erfinder: HACKL, Stefan, 92421 Schwandorf (DE); KNORR, Rainer, 93055 Regensburg (DE); LUGERT, Günter, 93055 Regensburg (DE)
(86) Internationale Anmeldenummer: PCT/EP2004/000217
(87) Internationale Veröffentlichungsnummer: WO 2004/070911

(56) Entgegenhaltungen:
- WO-A-02/066293
- WO-A-02/080334
- DE-A- 10 020 304
- DE-A- 19 855 245

## Beschreibung

Die Erfindung betrifft eine Vorrichtung zur Energieversorgung eines mit sicherheitsrelevanten Komponenten ausgestatteten Zweispannungs-Bord-netzes, mit einem mit einer Brennkraftmaschine mechanisch gekoppelten Starter-Generator, dem ein bidirektionaler AC/DC-Wandler nachgeschaltet ist, dessen DC-Anschluss über einen ersten Schalter mit einem ersten Akkumulator, welcher ein erstes Bordnetz und dessen Lasten mit Energie versorgt, verbunden ist, und über einen zweiten Schalter mit einem Doppelschichtkondensator verbunden ist, und mit einem bidirektionalen DC/DC-Wandler mit einem zweiten Akkumulator, welcher ein zweites Bordnetz und dessen Lasten mit Energie versorgt.

Der Betrieb eines Starter-Generators in einem Kraftfahrzeug kann üblicherweise an einer Bordnetzspannung von 14V erfolgen (genauer 14.4V, das ist die Ladespannung eines 12V-Akkumulators). Die Abgabeleistung, aber auch die Generatorleistung ist dabei technisch sinnvoll auf maximal 3kW begrenzt, da sonst die Bordnetzströme zu hoch würden. Ein Starter-Generator kann zwar bei einer Bordnetzspannung von 14V die Brennkraftmaschine starten und die elektrischen Lasten während der Fahrt versorgen, für weitere Funktionen unter Aufnahme oder Abgabe elektrischer Energie wie Boost (Beschleunigen) oder Rekuperation (Bremsen) ist jedoch eine Leistung von mehr als 3kW erforderlich. Diese Leistung ist nur mit einer höheren Bordnetzspannung erreichbar. Es werden deshalb 42V-Bordnetze (42V ist die Ladespannung eines 36V-Akkumulators) entwickelt, welche die Umsetzung großer elektrischer Leistungen, beispielsweise etwa 6kW, erlauben.

Ein Integrierter Starter-Generator, im folgenden abgekürzt ISG genannt, ist beispielsweise als Drehstrom-Asynchronmaschine mit elektronischem Wechselrichter ausgeführt, die an Stelle der Schwungscheibe direkt an die Kurbelwelle der Brennkraftmaschine angebaut ist. Sie erlaubt im generatorischen Betrieb, angetrieben von der Brennkraftmaschine, in welchem sie als Energiequelle wirkt, die Erzeugung elektrischer Leistung, und im motorischen Betrieb, die Brennkraftmaschine antreibend, die Erzeugung mechanischer Antriebsleistung; sie ersetzt also sowohl den bekannten Generator (Lichtmaschine), als auch den üblichen Starter (Anlasser). Da die verfügbaren Leistungen erheblich steigen (6kW gegenüber 2kW bei bekannten Lichtmaschinen), erlaubt der ISG neben Motorstart und Bordnetzversorgung weitere Funktionen wie
a) Boost (Beschleunigen): Drehmomentunterstützung der Brennkraftmaschine während der Beschleunigungsphase des Fahrzeuges. Der ISG verfügt über ein maximales Drehmoment von ca. 200Nm, dies entspricht etwa dem Drehmoment einer 2Liter-Brennkraftmaschine (während des Boostvorganges werden für ca. 15 Sekunden Ströme bis ca. 270A benötigt) und
b) Rekuperation (regeneratives Bremsen): der ISG schöpft beim Bremsen des Fahrzeuges Bewegungsenergie durch Stromerzeugung ab. Dabei werden für bis zu 30 Sekunden Ströme bis ca. 270A erzeugt.

Im Motorbetrieb, d.h., beim Start der Brennkraftmaschine und im Boostbetrieb (Beschleunigung) bezieht ein Starter-Generator die Energie aus wenigstens einem Energiespeicher.

Im Generatorbetrieb wird der Starter-Generator von der Brennkraftmaschine angetrieben und ist somit in der Lage, den oder die Energiespeicher wieder aufzuladen. Dies kann im normalen Betrieb mit geringer Leistung erfolgen, aber auch bei einem Betrieb mit erhöhter Leistung, beispielsweise im Rekuperationsbetrieb mit einer Leistung, die der maximalen Leistungsabgabe des Starter-Generators entsprechen kann.

Diese Vorgaben erfordern eine erhöhte Leistungsfähigkeit des Energiespeichers, der beispielsweise pro 100.000 gefahrenen Kilometern etwa 200.000mal die Brennkraftmaschine starten, die Energie für den Boostvorgang zur Verfügung stellen und die Bremsenergie wieder aufnehmen können muss.

Aufgrund der Zyklenfestigkeit von 200 Vollzyklen eines preisgünstigen Bleiakkumulators kann bei dieser Anwendungsart eine maximal zurückgelegte Fahrstrecke von weniger als 10.000km erwartet werden, was nicht akzeptabel ist.

Aus diesem Grund wird ein Bleiakkumulator mit einem Doppelschichtkondensator kombiniert. Da der Akkumulator nun nicht mehr zyklisch belastet wird, ist eine Lebensdauer gemäß heutigem Standard zu erwarten.

Eine solche Kombination ist aus WO 02/066293 A1 bekannt und in Figur 2 dargestellt. Diese Figur zeigt den Schaltplan eines Zweispannungs-Bordnetzes (42V/14V) mit einem mit einer Brennkraftmaschine mechanisch gekoppelten Integrierten Starter-Generator, dem ein bidirektionaler AC/DC-Wandler nachgeschaltet ist. Der positive Gleichspannungsanschluss des AC/DC-Wandlers ist
a) über einen ersten Schalter S1 mit dem positiven Pol eines 36V-Akkumulators B1, welcher ein 42V-Bordnetz mit Energie versorgt, mit den parallel zum 36V-Akkumulator B1 liegenden großen Lasten V1 (deren andere Anschlüsse mit dem Bezugspotential GND verbunden sind), und in Reihenschaltung zum ersten Schalter S1 mit einem dritten Schalter S3 verbunden, der zu einem bidirektionalen DC/DC-Wandler 2 führt,
b) über einen zweiten Schalter S2 mit dem positiven Anschluss eines Doppelschichtkondensators DLC (dessen negativer Anschluss mit dem Bezugspotential GND verbunden ist), und in Reihenschaltung zum zweiten Schalter S2 mit einem vierten Schalter S4 verbunden, der parallel zum dritten Schalter S3 zu dem bidirektionalen DC/DC-Wandler 2 führt. Die andere Seite des DC/DC-Wandlers 2 führt zu einem 12V-Akkumulator B2, welcher das 14V-Bordnetz mit Energie versorgt, mit den parallel zum 12V-Akkumulator B2 liegenden kleinen Lasten v2 (deren andere Anschlüsse mit dem Bezugspotential GND verbunden sind).

Die mittels dieser Schaltung durchgeführten Betriebsabläufe, insbesondere die Bestimmung der Arbeitsrichtung der Wandler (Aufwärts- oder Abwärtswandlung), die Ladung der Energiespeicher und die Schaltstellungen der vier Schalter S1 bis S4 werden von einer nicht dargestellten Steuer-/Regel-Schaltung gesteuert/geregelt.

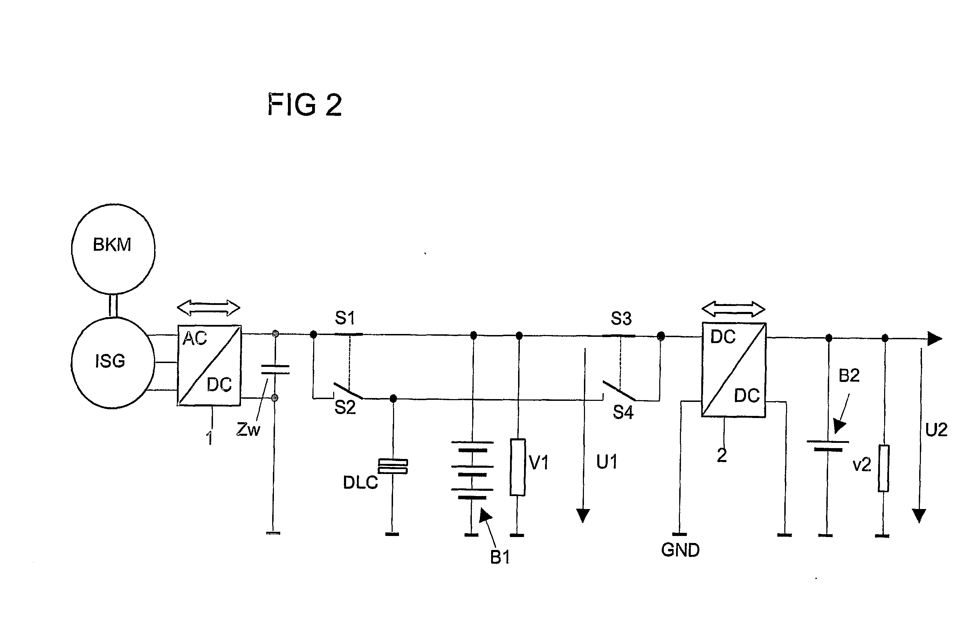

Neben den bekannten Komfortkomponenten (Klima, Audio etc.) und den neuen Hochstromanwendungen (Boost, Rekuperation) sind sicherheitsrelevante Komponenten mit sog. "x-by-wire"-Funktionen in Entwicklung, wie beispielsweise ein elektromechanisches Bremssystem oder ein elektrisches Fahrzeug-Lenksystem. Solche sicherheitsrelevanten Komponenten sind in der bekannten Schaltung nach Figur 2 nicht enthalten. Der Ausfall eines solchen Systems, beispielsweise durch Ausfall dessen Energieversorgung, hätte katastrophale Folgen.

Deshalb wird für derartige sicherheitsrelevanten Komponenten eine eigene Energiequelle gefordert. Diese Energiequelle kann vom Starter-Generator ISG oder vom Akkumulator B1 mit Energie versorgt werden.

Im allgemeinen ist dies ein im Vergleich zum 36V-Akkumulator B1 etwas kleinerer Akkumulator, der im Fall des Ausfalls von ISG oder B1 die Energieversorgung der sicherheitsrelevanten Komponenten für einen definierten Zeitraum übernehmen kann. Der Energieinhalt und der "Gesundheitszustand" dieser zusätzlichen Energiequelle muss natürlich auch bekannt sein!

Werden Akkumulatoren nicht ständig geladen oder nachgeladen, ist eine genaue Kenntnis ihrer Energievorräte nötig. Die Erfassung des Energievorrats eines Akkumulators ist schwierig und komplex. Zusätzlich haben Akkumulatoren eine starke Abhängigkeit der entnehmbaren Energie von der Temperatur und können überraschend und unvorhersehbar gänzlich ausfallen.

Der Aufwand für eine solche zusätzliche Energiequelle ist groß. Da die Leistungsanforderung an einen Akkumulator, bezogen auf seine Größe, sehr hoch ist, kann der Akkumulator nicht beliebig klein sein und muss zur Erfüllung der Leistungsanforderung energetisch oft überdimensioniert werden.

Auch das Gewicht eines solchen zusätzlichen Speichers ist oft ein limitierender Faktor. Schließlich sind es noch die weiteren Kosten für den Akkumulator und dessen Überwachung sowie der Platzbedarf, welche diese Lösung unattraktiv erscheinen lassen.

Aus DE 198 55 245 A1 ist eine redundante Spannungsversorgung für elektrische Verbraucher, insbesondere für sicherheitsrelevante Verbraucher (elektrisch betätigbare Bremsen) bekannt, welche einen ersten Akkumulator aufweist, der von einem Drehstrom-Generator direkt aufgeladen wird, und der in einer ersten Version das Bordnetz und einen sicherheitsrelevanten Verbraucher auflädt. Ein zweiter Akkumulator, der ausschließlich als "Notstromaggregat" für sicherheitsrelevante Verbraucher vorgesehen ist, wird von dem Drehstrom-Generator über einen DC/DC-Wandler geladen. Jeder dieser beiden Akkumulatoren ist für den Fall eines Kurzschlusses oder sonstigen Fehlers durch ein Ladetrennmodul von seiner Energieversorgung und durch ein Trennmodul und gegebenenfalls einen zusätzlichen Schalter vom Verbraucher abtrennbar. Für jeden weiteren sicherheitsrelevanten Verbraucher sind zusätzlich zwei Ladetrennmodule, zwei Trennmodule und gegebenenfalls zwei zusätzliche Schalter nötig. In einer zweiten Version sind der erste und der zweite Akkumulator ausschließlich zur Energieversorgung sicherheitsrelevanter Verbraucher vorgesehen, wodurch für die Energieversorgung des Bordnetzes ein weiterer - dritter -Akkumulator erforderlich ist.

Aus DE 101 03 951 A1 ist schließlich eine Energieversorgungseinrichtung für bordgestützte, sicherheitsrelevante Systemkomponenten von Fahrzeugen bekannt, welche drei (oder mehr) voneinander unabhängige Energieeinspeisungen, je eine durch einen Schalter zu öffnende und zu schließende Anschlussleitung zwischen jeder Energieeinspeisung und jeder Systemkomponente, sowie Logik-Steuereinheiten für die Schalter aufweist.

Es ist Aufgabe der Erfindung, eine einfache und kostengünstige Vorrichtung zur sicheren Energieversorgung eines mit sicherheitsrelevanten Komponenten ausgestatteten Zweispannungs-Bordnetzes zu schaffen, welches in Kosten, technischem Aufwand, Platzbedarf und Gewicht die Energieversorgung eines Zweispannungs-Bordnetzes ohne sicherheitsrelevante Komponenten nicht wesentlich übersteigt und ohne Notstromaggregat für die sicherheitsrelevanten Verbraucher auskommt.

Diese Aufgabe wird erfindungsgemäß durch eine Vorrichtung gemäß den Merkmalen von Anspruch 1 gelöst.

Die Erfindung umfasst die technische Lehre, die in Figur 2 gezeigte Schaltung zu vereinfachen und die für die Energieversorgung der sicherheitsrelevanten Komponenten geforderte zusätzliche Energiequelle durch diese einfache Schaltung zu ersetzen, wodurch die vorhandenen vier Energiequellen (integrierter Starter-Generator ISG, erster Akkumulator B1, Doppelschichtkondensator DLC und zweiter Akkumulator B2) die Energieversorgung der sicherheitsrelevanten Komponenten je nach Verfügbarkeit direkt übernehmen können. Durch diese Maßnahme wird die Sicherheit wesentlich erhöht, da anstelle eines geforderten "Notstromaggregats" bei Ausfall der Energieversorgung der sicherheitsrelevanten Komponenten nunmehr drei weitere solcher zusätzlicher Energiequellen alternativ zur Verfügung stehen.

Nur wenige Energiespeicher sind in der Lage, so hohe Zyklenzahlen bzw. einen so hohen Energiedurchsatz bereitzustellen, wie ein Doppelschichtkondensator. Dessen Energiespeicherfähigkeit ist jedoch begrenzt und für eine längere Versorgung der Bordnetzlasten nicht geeignet.

Durch die Kombination von Akkumulatoren als Energiespeicher und Doppelschichtkondensator DLC als zyklenfester Leistungsspeicher kann die notwendige Energie und Leistung für den ISG zur Verfügung gestellt werden, so dass dieser seine volle Leistungsfähigkeit bei Start/Stop, Boosten und rekuperiertem Bremsen einsetzen kann. Zusätzlich ist der DLC eine weitere Energiequelle für die sicherheitsrelevanten Komponenten. Insgesamt stehen damit in einem Zweispannungs-Bordnetz vier Energiequellen zur Verfügung. Damit lässt sich für sicherheitsrelevante Komponenten ein redundantes Energienetz aufbauen.

Der Arbeitsspannungsbereich von sicherheitsrelevanten Komponenten ist sehr groß und kann beispielsweise in einem 42V-Bordnetz zwischen 20V und 58V liegen.

Vorteilhafte Weiterbildungen der Erfindung sind den Unteransprüchen zu entnehmen.

Ein Ausführungsbeispiel nach der Erfindung wird nachstehend anhand einer schematischen Zeichnung näher erläutert. In der Zeichnung zeigen:
- Figur 1: die Schaltung eines erfindungsgemäßen Zweispannungs-Bordnetzes mit integriertem Starter-Generator, Doppelschichtkondensator und sicherheitsrelevanten Komponenten,
- Figur 2: die Schaltung eines bekannten Bordnetzes mit einem integrierten Starter-Generator und Doppelschichtkondensator.

Figur 2 wurde bereits weiter oben erläutert.

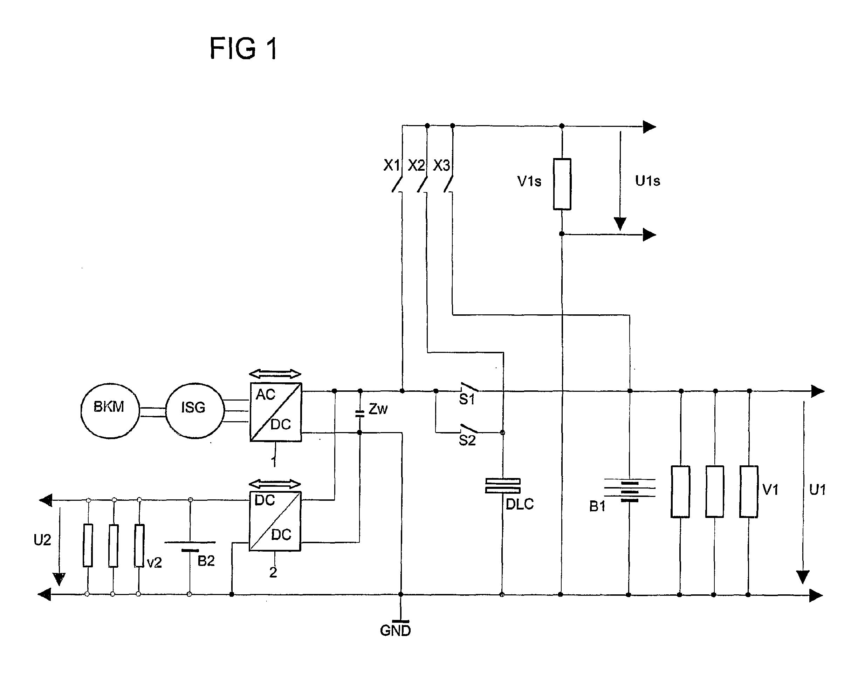

Figur 1 zeigt die Schaltung eines Ausführungsbeispiels einer erfindungsgemäßen Vorrichtung zur Energieversorgung eines Zweispannungs-Kraftfahrzeug-Bordnetzes (beispielsweise 14V/42V) mit einem Starter-Generator ISG, einem Doppelschichtkondensator DLC und mit sicherheitsrelevanten Komponenten V1s, beispielsweise einer elektromechanischen Bremse.

Der mit einer Brennkraftmaschine BKM verbundene, integrierte Starter-Generator ISG ist mit einem bidirektionalen AC/DC-Wandler 1 und über diesen und einen ersten Schalter S1 mit einem ersten Akkumulator B1 (36V) verbunden, der die größeren Lasten V1 des ersten Bordnetzes (42V) speist, und über den AC/DC-Wandler 1 und einen zweiten Schalter S2 mit einem Doppelschichtkondensator DLC verbunden. Ein üblicher Zwischenkreiskondensator Zw ist zwischen den DC-Ausgängen des AC/DC-Wandlers 1 angeordnet. Insoweit stimmt die erfindungsgemäße Schaltung mit der aus Figur 2 bekannten Schaltung überein.

Anders als in Figur 2 ist der AC/DC-Wandler 1 direkt mit dem bidirektionalen DC/DC-Wandler 2 und über diesen mit dem zweiten Akkumulator B2 (12V) verbunden, welcher die kleineren Lasten v2 des zweiten Bordnetzes (14V) speist. Dadurch können die beiden Schalter S3 und S4 eingespart werden.

Zusätzlich ist eine sicherheitsrelevante Komponente V1s, beispielsweise eine elektromechanische Bremse, vorgesehen. Deren Energieversorgung erfolgt erfindungsgemäß alternativ:
a) vom Integrierten Startergenerator ISG oder vom zweiten Akkumulator B2 über einen ersten Sicherheitsschalter X1 von der Verbindungsleitung zwischen dem AC/DC-Wandler 1 und dem ersten Schalter S1,
b) vom Doppelschichtkondensator DLC über einen zweiten Sicherheitsschalter X2 von der Verbindungsleitung zwischen dem zweiten Schalter S2 und dem Doppelschichtkondensator DLC, oder
c) vom ersten Akkumulator B1 über einen dritten Sicherheitsschalter X3 vom Pluspol des ersten Akkumulators B1.

Jede Last ist über einen der Übersichtlichkeit wegen nicht dargestellten, mit ihr in Reihe liegenden Schalter ein- und ausschaltbar. Die Energieversorgungsleitungen zu den jeweiligen Lastgruppen (Verbrauchern) V1, V1s und v2 sind mit Pfeilen versehen, was andeuten soll, dass weitere Lasten angeschlossen sein können.

Die mittels der in Figur 1 dargestellten Schaltung durchgeführten Betriebsabläufe, insbesondere die Bestimmung der Arbeitsrichtung der Wandler (Aufwärts- oder Abwärtswandlung), die Ladung der Energiespeicher und die Schaltstellungen der Schalter S1, S2 und X1 bis X3 werden von einer nicht dargestellten Steuer-/Regel-Schaltung gesteuert/geregelt.

Durch die Einbindung des Doppelschichtkondensators DLC werden sowohl das erste als auch das zweite Bordnetz mit den Bleiakkumulatoren B1 und B2 deutlich entlastet.

Der große Vorteil, neben der Einsparung von zwei Schaltern, liegt für die sicherheitsrelevanten Komponenten der erfindungsgemäßen Energieversorgung darin, dass für ihre alternative Energieversorgung aus den vier vorhandenen Energiequellen ISG, DLC, B1 und B2 nur drei Schalter X1 bis X3 erforderlich sind und dass diese einfach überwacht werden kann. Die Akkumulatoren werden ständig nachgeladen, man kann also davon ausgehen, dass sie ständig voll geladen sind, und der Doppelschichtkondensator DLC kann sehr einfach kontrolliert werden. Sein Energieinhalt lässt sich durch einfache Spannungsmessung ermitteln. Auch sein Alterungszustand ist, im Gegensatz zu einem Akkumulator, einfach über eine Messung von Spannung und Innenwiderstand festzustellen. Einbussen seiner Leistungsfähigkeit durch tiefe Temperaturen sind zu vernachlässigen, bei einigen Kondensatortypen steigt die Leistungsfähigkeit mit tiefer werdenden Temperaturen sogar an!

Die obere und untere Spannungsgrenze (nach SICAN/VDA-Empfehlung) von 48V bzw. 30V beziehen sich nur auf die Spannungen im 42V-Bordnetz; sie werden durch die erfindungsgemäße Vorrichtung eingehalten.

Um die Leistungsfähigkeit des Starter-Generators ISG und des Doppelschichtkondensators DLC zu erhöhen, kann die Spannung dieser beiden Komponenten temporär höher sein. Die maximale Spannung sollte jedoch kleiner als 60V sein, das ist die maximal zulässige Spannung, bei der kein zusätzlicher Berührungsschutz erforderlich ist.

Eine höhere Spannung am Doppelschichtkondensator DLC hat den Vorteil, dass der Starter-Generator ISG ein höheres Moment bereitstellen kann und die Energiespeicherfähigkeit des Doppelschichtkondensators DLC, die sich quadratisch zur Spannung verhält, ansteigt. Es kommt zu einer Leistungssteigerung des gesamten Bordnetzes.

Der Doppelschichtkondensator DLC sollte in einem Spannungsbereich >30V...<60V betrieben werden. Eine höhere Spannung erfordert einen zusätzlichen Berührungsschutz (siehe oben), eine tiefere Entladung als bis 30V erzeugt bei gleichbleibender Last sehr hohe Entladeströme, wobei nur noch ein Viertel der gespeicherten Energie abgeschöpft werden kann, welche als minimale, ständige Energiereserve erhalten bleiben soll.

Eine elektromechanische Bremse als sicherheitsrelevante Komponente, die im gesamten Spannungsbereich des Doppelschichtkondensators DLC betrieben werden kann, benötigt bei gestörter Funktionalität des Bordnetzes pro Bremsvorgang eine Energie von etwa 1.4 Wh. Bei einer Energieversorgung der elektromechanischen Bremse aus einem Doppelschichtkondensator mit beispielsweise 115F, der eine Energiereserve von 8Wh aufweist, reicht diese Energiereserve für mindestens 5 Bremsvorgänge!

Insgesamt stehen im Zweispannungs-Bordnetz (14V/42V) für die Energieversorgung sicherheitsrelevanter Komponenten vier Energiequellen zur Verfügung: Starter-Generator ISG, Doppelschichtkondensator DLC, Akkumulator B1 und Akkumulator B2.

Bei einem 42V-Einspannungs-Bordnetz, bei welchem der DC/DC-Wandler 2 und Akkumulator B2 mit seinen Verbrauchern v2 nicht vorhanden sind - die übrige Schaltung ist unverändert - stehen drei Energiequellen ISG, DLC und B1 zur Verfügung.

Jede dieser Energiequellen ist in der Lage, die Versorgung der sicherheitsrelevanten Komponenten V1s zu übernehmen, wenn es die Situation erfordern sollte. Fällt eine Energiequelle aufgrund einer Fehlfunktion/Fehldiagnose aus, stehen weitere Energiequellen zur Verfügung, welche die Energieversorgung der sicherheitsrelevanten Komponenten V1s übernehmen können. Es besteht daher immer eine mehrfache Redundanz, so dass ein ausschließlich für die sicherheitsrelevanten Komponenten V1s vorgesehener Akkumulator entfallen kann, eine große Kosten- und Gewichtsersparnis.

Im Normalbetrieb werden vom Integrierten Starter-Generator ISG im generatorischen Betrieb über den AC/DC-Wandler 1 der Akkumulator B1 über Schalter S1, der Doppelschichtkondensator DLC über Schalter S2 und der Akkumulator B2 über den DC/DC-Wandler 2 aufgeladen. Die sicherheitsrelevanten Komponenten V1s werden vom 36V-Akkumulator B1 über den geschlossenen Sicherheitsschalter X3 mit Energie versorgt. Boosten und rekuperiertes Bremsen erfolgt in Zusammenarbeit des integrierten Starter-Generators ISG mit dem Doppelschichtkondensator DLC.

Bei einem Startvorgang wird der Integrierte Starter-Generator ISG im motorischen Betrieb vom Doppelschichtkondensator DLC oder vom ersten Akkumulator B1 über Schalter S1 oder S2 und den AC/DC-Wandler 1 (der jetzt Gleichstrom in Drehstrom umwandelt) mit Energie versorgt.

In Ausnahmefällen kann auch der Doppelschichtkondensator DLC oder der Akkumulator B1 vom Akkumulator B2 oder der Akkumulator B2 vom Doppelschichtkondensator DLC oder vom Akkumulator B1 aufgeladen werden.

In einem solchen Bordnetz können Fehler oder Störungen (Kurzschlüsse oder Leitungsunterbrechungen) bzw. Fehldiagnosen auftreten. Im folgenden sollen die Folgen von Kurzschlüssen der Energiequellen und die Sicherstellung der Energieversorgung der sicherheitsrelevanten Komponenten untersucht werden.

Bei einem Kurzschluss des ersten Akkumulators B1, bei welchem die Energieversorgung des ersten Bordnetzes ausfällt, werden von der Steuer-/Regelschaltung der erste Schalter S1 und der dritte Sicherheitsschalter X3 nichtleitend gesteuert, um diesen Kurzschluss räumlich zu begrenzen. Die Energieversorgung der sicherheitsrelevanten Komponenten V1s kann in diesem Fall
a) vom integrierten Starter-Generator ISG über den AC/DC-Wandler 1 und den ersten Sicherheitsschalter X1, oder
b) vom zweiten Akkumulator B2 über den DC/DC-Wandler 2 und den ersten Sicherheitsschalter X1, oder
c) vom Doppelschichtkondensator DLC über den zweiten Sicherheitsschalter X2
erfolgen.

Bei einem Kurzschluss des Doppelschichtkondensators DLC werden der zweite Schalter S2 und der zweite Sicherheitsschalter X2 nichtleitend gesteuert. Die Energieversorgung sicherheitsrelevanter Komponenten V1s kann
a) vom ersten Akkumulator B1 über den dritten Sicherheitsschalter X3, oder
b) vom integrierten Starter-Generator ISG über den AC/DC-Wandler 1 und den ersten Sicherheitsschalter X1, oder
c) vom zweiten Akkumulator B2 über den DC/DC-Wandler 2 und den ersten Sicherheitsschalter X1
erfolgen.

Bei einem Kurzschluss am DC-Ausgang des AC/DC-Wandlers 1 werden der erste Schalter S1, der zweite Schalter S2 und der erste Sicherheitsschalter X1 nichtleitend gesteuert. Die Energieversorgung sicherheitsrelevanter Komponenten V1s kann
a) vom ersten Akkumulator B1 über den dritten Sicherheitsschalter X3, oder
b) vom Doppelschichtkondensator DLC über den zweiten Sicherheitsschalter X2 erfolgen.

Bei einem Kurzschluss des zweiten Energiespeichers B2, bei welchem das zweite Bordnetz ausfällt, kann die Energieversorgung sicherheitsrelevanter Komponenten vls
a) vom ersten Akkumulator B1 über den dritten Sicherheitsschalter X3, oder
b) vom Doppelschichtkondensator DLC über den zweiten Sicherheitsschalter X2, oder
c) vom integrierten Starter-Generator ISG über den AC/DC-Wandler 1 und den ersten Sicherheitsschalter X1
erfolgen.

Aus dieser Untersuchung ist ersichtlich, dass bei einem Kurzschluss eines Energiespeichers im Zweispannungs-Bordnetz immer noch zwei bis drei Energiequellen zur Energieversorgung der sicherheitsrelevanten Komponenten zur Verfügung stehen. Bei einer Leitungsunterbrechung stehen ebenfalls mindestens zwei Energiequellen zur Energieversorgung der sicherheitsrelevanten Komponenten zur Verfügung, wie aus Figur 1 bei einer beliebigen Leitungsunterbrechung entnommen werden kann.

Dabei sind bei dieser Untersuchung nur die direkten Verbindungen von den funktionsfähigen Energiequellen zu den sicherheitsrelevanten Komponenten berücksichtigt, und nicht die möglichen Umwege (z. B. von Akkumulator B1 über S1 und X1).

Ähnlich verhält es sich bei Zweifachfehlern oder -störungen (ein Kurzschluss, eine Unterbrechung bzw. zwei Kurzschlüsse oder zwei Unterbrechungen) und bei Dreifachfehlern, wie aus Figur 1 ersichtlich. Es existiert immer wenigstens eine intakte Energiequelle zur Versorgung der sicherheitsrelevanten Komponenten.

Der einzige Fehler, bei dem die Energieversorgung der sicherheitsrelevanten Komponenten völlig zusammenbricht, ist der, dass gleichzeitig Akkumulator B1 und Doppelschichtkondensator DLC durch Kurzschluss ausfallen und am DC-Ausgang des AC/DC-Wandlers 1 ein Kurzschluss oder eine Unterbrechung auftritt.

Die Wahrscheinlichkeit eines derartigen Fehlers ist jedoch verschwindend gering gegenüber der Annahme, dass ein zusätzlicher Akkumulator zur Speisung der sicherheitsrelevanten Lasten V1s ausfällt.

Die nicht dargestellte Steuer-/Regel-Schaltung zur Aktivierung der Schalter wertet auch die Soll- und Ist-Ladezustände der Energiequellen aus, und überwacht den integrierten Starter-Generator ISG und die beiden Wandler 1 und 2.

Insgesamt betrachtet, besteht der Mehraufwand der erfindungsgemäßen Vorrichtung zur Energieversorgung eines mit sicherheitsrelevanten Komponenten ausgestatteten Zweispannungs-Bordnetzes gegenüber der bekannten Vorrichtung zur Energieversorgung eines Zweispannungs-Bordnetzes ohne sicherheitsrelevante Komponenten - bei Wegfall von zwei Schaltern S3, S4 und zusätzlichen drei Schaltern X1, X2, X3 - aus einem einzigen Schalter, welcher sowohl Kosten als auch technischen Aufwand, Platzbedarf und Gewicht in nicht nennenswertem Umfang steigert.

## Patentansprüche

1. Vorrichtung zur Energieversorgung eines Zweispannungs-Bordnetzes
mit einem mit einer Brennkraftmaschine (BKM) mechanisch gekoppelten Starter-Generator (ISG), dem ein bidirektionaler AC/DC-Wandler (1) nachgeschaltet ist, dessen DC-Anschluss
- über einen ersten Schalter (S1) mit einem ersten Akkumulator (B1), welcher ein erstes Bordnetz und dessen Lasten (V1) mit Energie versorgt, verbunden ist, und
- über einen zweiten Schalter (S2) mit einem Doppelschichtkondensator (DLC) verbunden ist,
mit einem bidirektionalen DC/DC-Wandler (2), dem ein zweiter Akkumulator (B2) nachgeschaltet ist, welcher ein zweites Bordnetz und dessen Lasten (v2) mit Energie versorgt, verbunden ist, und
mit einer Steuer-/Regelschaltung, welche die Betriebsabläufe dieser Vorrichtung - die Bestimmung der Arbeitsrichtung der Wandler (1, 2), die Ladung der Energiequellen (B1, B2, DLC) und die Schaltstellungen aller Schalter - steuert/regelt,
**dadurch gekennzeichnet ,**
**dass** der bidirektionale DC/DC-Wandler (2) direkt mit dem DC-Anschluss des bidirektionalen AC/DC-Wandlers (1) verbunden ist,
**dass** ein erster Sicherheitsschalter (X1) vorgesehen ist, über welchen die Energieversorgung sicherheitsrelevanter Komponenten (V1s) vom integrierten Starter-Generator (ISG) über den bidirektionalen AC/DC-Wandler (1) oder alternativ vom zweiten Akkumulator (B2) über den bidirektionalen DC/DC-Wandler (2) erfolgt,
**dass** ein zweiter Sicherheitsschalter (X2) vorgesehen ist, über welchen die Energieversorgung sicherheitsrelevanter Komponenten (V1s) vom Doppelschichtkondensator (DLC) erfolgt, und
**dass** ein dritter Sicherheitsschalter (X3) vorgesehen ist, über welchen die Energieversorgung sicherheitsrelevanter Komponenten (V1s) vom ersten Akkumulator (B1) erfolgt.

2. Vorrichtung nach Anspruch 1, **dadurch gekennzeichnet, dass** im normalen Betriebsfall, d.h., im generatorischen Betrieb des integrierten Starter-Generators (ISG), die Energieversorgung sicherheitsrelevanter Komponenten (V1s) vom ersten Akkumulator (B1) über den dritten Sicherheitsschalter (X3) erfolgt.

3. Vorrichtung nach Anspruch 1, **dadurch gekennzeichnet, dass** bei einem Kurzschluss des ersten Akkumulators (B1) der erste Schalter (S1) und der dritte Sicherheitsschalter (X3) nichtleitend gesteuert werden und die Energieversorgung sicherheitsrelevanter Komponenten (V1s)
a) vom integrierten Starter-Generator (ISG) über den AC/DC-Wandler (1) und den ersten Sicherheitsschalter (X1), oder
b) vom zweiten Akkumulator (B2) über den DC/DC-Wandler (2) und den ersten Sicherheitsschalter (X1), oder
c) vom Doppelschichtkondensator (DLC) über den zweiten Sicherheitsschalter (X2)
erfolgt.

4. Vorrichtung nach Anspruch 1, **dadurch gekennzeichnet, dass** bei einem Kurzschluss des Doppelschichtkondensators (DLC) der zweite Schalter (S2) und der zweite Sicherheitsschalter (X2) nichtleitend gesteuert werden und die Energieversorgung sicherheitsrelevanter Komponenten (V1s)
a) vom ersten Akkumulator (B1) über den dritten Sicherheitsschalter (X3), oder
b) vom integrierten Starter-Generator (ISG) über den AC/DC-Wandler (1) und den ersten Sicherheitsschalter (X1), oder
c) vom zweiten Akkumulator (B2) über den DC/DC-Wandler (2) und den ersten Sicherheitsschalter (X1)
erfolgt.

5. Vorrichtung nach Anspruch 1, **dadurch gekennzeichnet, dass** bei einem Kurzschluss am DC-Ausgang des AC/DC-Wandlers (1) der erste Schalter (S1), der zweite Schalter (S2) und der erste Sicherheitsschalter (X1) nichtleitend gesteuert werden und die Energieversorgung sicherheitsrelevanter Komponenten (V1s)
a) vom ersten Akkumulator B1 über den dritten Sicherheitsschalter X3, oder
b) vom Doppelschichtkondensator DLC über den zweiten Sicherheitsschalter X2
erfolgt.

6. Vorrichtung nach Anspruch 1, **dadurch gekennzeichnet, dass** bei einem Kurzschluss des zweiten Energiespeichers (B2) die Energieversorgung sicherheitsrelevanter Komponenten V1s
a) vom ersten Akkumulator B1 über den dritten Sicherheitsschalter X3, oder
b) vom Doppelschichtkondensator DLC über den zweiten Sicherheitsschalter X2, oder
c) vom integrierten Starter-Generator ISG über den AC/DC-Wandler 1 und den ersten Sicherheitsschalter X1
erfolgt.

## Claims

1. Device for supplying energy to a two-voltage vehicle electrical system
with an integrated starter-generator (ISG) mechanically coupled to an internal combustion engine (BKM), downstream from which is connected a bidirectional AC/DC-converter, of which the DC terminal
- is connected via first switch (S1) to a first accumulator (B1) which supplies a first vehicle electric system and its loads (V1) with power, and
- is connected via a second switch (S2) to a double-layer capacitor (DLC),
is connected to a bidirectional DC/DC converter (2), downstream from which a second accumulator (B2) is connected, which supplies a second vehicle electrical system and its loads (v2) with power, and
with a control/regulation circuit, which controls/regulates the operational sequences of this device - the determination of the direction of operation of the converters (1, 2), the charging of the sources of energy (B1, B2, DLC) and the switch positions of all switches,
**characterized in that**
the bidirectional DC/DC converter (2) is directly connected to the DC terminal of the bidirectional AC/DC converter (1),
a first safety switch (X1) is provided, via which power is supplied to safety-relevant components (V1s) by the integrated starter-generator (ISG) via the bidirectional AC/DC converter (1) or alternatively by the second accumulator (B2) via the bidirectional DC/DC converter (2),
a second safety switch (X2) is provided, via which power is supplied to safety-relevant components (V1s) by the double-layer capacitor (DLC), and
a third safety switch (X3) is provided, via which power is supplied to safety-relevant components (V1s) by the first accumulator (B1).

2. Device according to claim 1, **characterized in that**, in normal operation, i.e., when the integrated starter-generator (ISG) is operating as a generator, power is supplied to safety-relevant components (V1s) by the first accumulator (B1) via the third safety switch (X3).

3. Device according to claim 1, **characterized in that**, with a short circuit of the first accumulator (B1) the first switch (S1) and the third safety switch (X3) are made non-conducting and power is supplied to safety-relevant components (V1s)
a) by the integrated starter-generator ISG via the AC/DC converter 1 and the first safety switch X1, or
b) by the second accumulator (B2) via the DC/DC converter (2) and the first safety switch (X1), or
c) by the double-layer capacitor (DLC) via the second safety switch (X2).

4. Device according to claim 1, **characterized in that**, with a short circuit of the double-layer capacitor (DLC) the second switch (S2) and the second safety switch (X2) are made non-conducting and power is supplied to safety-relevant components (V1s)
a) by the first accumulator (B1) via the third safety switch (X3), or
c) by the integrated starter-generator ISG via the AC/DC converter 1 and the first safety switch X1), or
c) by the second accumulator B2 via the DC/DC converter 2 and the first safety switch (X1).

5. Device according to claim 1, **characterized in that**, with a short circuit at the output of the AC/DC converter (1) the first switch (S1), the second switch (S2) and the first safety switch (X1) are made non-conductive and power is supplied to safety-relevant components (V1s)
a) be supplied by the first accumulator B1 via the third safety switch X3, or
b) by the double-layer capacitor DLC via the second safety switch X2.

6. Device according to claim 1, **characterized in that**, with a short circuit of the second energy accumulator (B2), power is supplied to the safety-relevant components V1s
a) be supplied by the first accumulator B1 via the third safety switch X3, or
b) by the double-layer capacitor DLC via the second safety switch X2, or
c) by the integrated starter-generator ISG via the AC/DC converter 1 and the first safety switch X1.

## Revendications

1. Dispositif pour alimenter en énergie un réseau de bord électrique bitension
comprenant un démarreur-générateur (ISG) mécaniquement couplé à un moteur à combustion interne (BKM), et en aval duquel un convertisseur CA-CC bidirectionnel (1) est branché dont les bornes CC
- sont connectées via un premier interrupteur (S1) à un premier accumulateur (B1) alimentant en énergie un premier réseau de bord et ses charges (V1), et
- sont reliées via un deuxième interrupteur (S2) à un condensateur électrochimique à double couche (DLC) ;
comprenant un convertisseur CC-CC bidirectionnel (2) en aval duquel est connecté un deuxième accumulateur (B2) alimentant en énergie un deuxième réseau de bord et ses charges (v2) ; et
comprenant un circuit de commande et de régulation commandant et régulant le déroulement des opérations de ce dispositif - à savoir la détermination du sens de fonctionnement des convertisseurs (1, 2), la charge des sources d'énergie (B1, B2, DLC) et la position de commutation de tous les interrupteurs - ,
**caractérisé en ce**
**que** le convertisseur CC-CC bidirectionnel (2) est relié directement aux bornes CC du convertisseur CA-CC bidirectionnel (1),
**qu'**un premier interrupteur de sécurité (X1) est prévu à travers lequel l'alimentation en énergie de composants relevant de la sécurité (V1s) est effectuée depuis le démarreur-générateur intégré (ISG) via le convertisseur CA-CC bidirectionnel (1) ou, alternativement, depuis le deuxième accumulateur (B2) via le convertisseur CC-CC bidirectionnel (2),
**qu'**un deuxième interrupteur de sécurité (X2) est prévu à travers lequel l'alimentation en énergie de composants relevant de la sécurité (V1s) est effectuée depuis le condensateur électrochimique à double couche (DLC), et
**qu'**un troisième interrupteur de sécurité (X3) est prévu à travers lequel l'alimentation en énergie de composants relevant de la sécurité (V1s) est effectuée depuis le premier accumulateur (B1).

2. Dispositif selon la revendication 1, **caractérisé en ce que** l'alimentation en énergie de composants relevant de la sécurité (V1s) est effectuée, dans le cas d'un fonctionnement normal, c'est-à-dire dans le mode de fonctionnement en générateur du démarreur-générateur intégré (ISG), depuis le premier accumulateur (B1) via le troisième interrupteur de sécurité (X3).

3. Dispositif selon la revendication 1, **caractérisé en ce que**, lors d'un court-circuit du premier accumulateur (B1), le premier interrupteur (S1) et le troisième interrupteur de sécurité (X3) sont pilotés pour devenir non conducteurs, et que l'alimentation en énergie de composants relevant de la sécurité (V1s) est effectuée
a) depuis le démarreur-générateur intégré (ISG) via le convertisseur CA-CC (1) et le premier interrupteur de sécurité (X1), ou
b) depuis le deuxième accumulateur (B2) via le convertisseur CC-CC (2) et le premier interrupteur de sécurité (X1), ou
c) depuis le condensateur électrochimique à double couche (DLC) via le deuxième interrupteur de sécurité (X2).

4. Dispositif selon la revendication 1, **caractérisé en ce que**, lors d'un court-circuit du condensateur électrochimique à double couche (DLC), le deuxième interrupteur (S2) et le deuxième interrupteur de sécurité (X2) sont pilotés en non conducteurs, et que l'alimentation en énergie de composants relevant de la sécurité (V1s) est effectuée
a) depuis le premier accumulateur (B1) via le troisième interrupteur de sécurité (X3), ou
b) depuis le démarreur-générateur intégré (ISG) via le convertisseur CA-CC (1) et le premier interrupteur de sécurité (X1), ou
c) depuis le deuxième accumulateur (B2) via le convertisseur CC-CC (2) et le premier interrupteur de sécurité (X1) .

5. Dispositif selon la revendication 1, **caractérisé en ce que**, lors d'un court-circuit à la sortie du courant continu du convertisseur CA-CC (1), le premier interrupteur (S1), le deuxième interrupteur (S2) et le premier interrupteur de sécurité (X1) sont pilotés en non conducteurs, et que l'alimentation en énergie de composants relevant de la sécurité (V1s) est effectuée
a) depuis le premier accumulateur (B1) via le troisième interrupteur de sécurité (X3), ou
b) depuis le condensateur électrochimique à double couche (DLC) via le deuxième interrupteur de sécurité (X2).

6. Dispositif selon la revendication 1, **caractérisé en ce que**, lors d'un court-circuit du deuxième accumulateur d'énergie (B2), l'alimentation en énergie de composants relevant de la sécurité (V1s) est effectuée
a) depuis le premier accumulateur (B1) via le troisième interrupteur de sécurité (X3), ou
b) depuis le condensateur électrochimique à double couche (DLC) via le deuxième interrupteur de sécurité (X2), ou
c) depuis le démarreur-générateur intégré (ISG) via le convertisseur CA-CC (1) et le premier interrupteur de sécurité (X1).
